# EUROPÄISCHE PATENTANMELDUNG

(11) **EP 1 498 180 A2**
(43) Veröffentlichungstag der Anmeldung: **19.01.2005**
(21) Anmeldenummer: 04016977.3
(22) Anmeldetag: 19.07.2004
(51) Int. Cl.: B01J 35/04, B01J 37/02

(54) **Metallischer Katalysatorsubstrat sowie Verfahren zu dessen Herstellung**

(30) Priorität: 18.07.2003 DE 10332995
(71) Anmelder: Rhodius GmbH, 91781 Weissenburg (DE)
(72) Erfinder: Schneider, Carola, 91781 Weissenburg (DE); Heubusch, Dieter, 91174 Spalt (DE)
(74) Vertreter: Weigel, Matthias, Dipl.-Ing.

(57) **Zusammenfassung**

Die Erfindung betrifft ein Katalysatorsubstrat (10) für einen Katalysator, insbesondere für einen Katalysator zur Behandlung von Abgasen einer Verbrennungskraftmaschine. Das Katalysatorsubstrat (10) hat einen Drahtkörper (14) aus gestricktem oder gewickeltem Draht. Die Drahtoberfläche des Drahtkörpers (14) ist mit Lot (22) beschichtet, an dem eine Washcoat-Zwischenschicht (24) anhaftet. Die Washcoat-Zwischenschicht (24) trägt wiederum eine katalytisch wirksame Schicht (26). Des weiteren betrifft die Erfindung ein Verfahren zur Herstellung eines derartigen Katalysatorsubstrates (10).

## Beschreibung

Die Erfindung betrifft ein Katalysatorsubstrat nach dem Oberbegriff des Anspruchs 1 für einen Katalysator, insbesondere für einen Katalysator zur Behandlung von Abgasen einer Verbrennungskraftmaschine. Ferner betrifft die Erfindung ein Verfahren nach dem Oberbegriff des Anspruchs 9 zur Herstellung eines derartigen Katalysatorsubstrates.

Katalysatoren, die beispielsweise zur Behandlung von Abgasen von Verbrennungskraftmaschinen oder zur Behandlung von Abgasen in der chemischen Industrie eingesetzt werden, sind üblicherweise aus Katalysatorsubstraten, auch Katalysatoreinsätze genannt, gebildet, welche in einem gemeinsamen Katalysatorgehäuse aufgenommen sind.

Das Katalysatorsubstrat hat einen Substratkörper, auf dessen Oberfläche eine katalytisch wirksame Schicht aufgetragen ist. Seit einiger Zeit werden als Substratkörper Drahtkörper verwendet, die aus einem geeigneten Metalldraht gestrickt oder gewickelt und, sofern erforderlich, durch Umformen in die gewünschte Form gebracht worden sind. Die Oberfläche des Drahtkörpers ist mit einer sogenannten Washcoat-Zwischenschicht beschichtet, auf welche die eigentliche katalytisch wirksame Schicht aufgebracht ist. Ein Katalysator mit einem derartigen Katalysatorsubstrat ist beispielsweise aus der DE 101 33 231 A1 bekannt.

Um zu gewährleisten, dass sich die die katalytisch wirksame Schicht tragende Washcoat-Zwischenschicht nicht vom Drahtkörper löst, wird der Drahtkörper aus einem Drahtmaterial gefertigt, dass eine besonders hohe chemische Affinität zu der die Washcoat-Zwischenschicht bildenden Substanz aufweist. So wird bei herkömmlichen Katalysatorsubstraten, bei denen eine Washcoat-Zwischenschicht aus Aluminiumoxid aufgebracht ist, als Drahtmaterial für den Drahtkörper aluminiumhaltiger Stahl, beispielsweise Aluchrom (CrAl 20 5 oder CrAl 25 5) verwendet.

Trotz Verwendung derartiger teurer Sonderstähle zeigen die Katalysatorsubstrate mit Drahtkörpern einen vergleichsweise hohen Grad an Degradation, d.h. die katalytisch wirksame Schicht vermindert sich über die Laufzeit des Bauteils gesehen schneller als bei Katalysatorsubstraten mit Keramikkörpern.

Es ist Aufgabe der Erfindung, das Katalysatorsubstrat der eingangs genannten Art bzw. das bekannte Verfahren zur Herstellung eines derartigen Katalysatorsubstrates so weiterzubilden, dass das Katalysatorsubstrat einen verglichen mit den bekannten, aus Draht gefertigten Katalysatorsubstraten geringeren Grad an Degradation zeigt.

Diese Aufgabe wird durch ein Katalysatorsubstrat mit den Merkmalen nach Anspruch 1 gelöst. Ferner wird die Aufgabe durch ein Verfahren mit den Merkmalen nach Anspruch 9 gelöst.

Bei dem erfindungsgemäßen Katalysatorsubstrat wird der Drahtkörper, bevor er mit der Washcoat-Zwischenschicht versehen wird, mit Lot beschichtet. Beim Beschichten des Drahtkörpers mit Lot werden die freiliegenden Drahtabschnitte von Lot ummantelt, während gleichzeitig das im heißen Zustand flüssige Lot aufgrund der zwischen den unmittelbar benachbart zueinander angeordneten Drahtabschnitten des Drahtkörpers wirkenden Kapillarkräfte in die Zwischenräume zwischen diesen gefördert wird. Im ausgehärteten Zustand umschließt das Lot die einzelnen Drahtabschnitte, während die unmittelbar zueinander benachbart angeordneten Drahtabschnitte miteinander verbunden werden, ohne dass dabei die Strömungsquerschnitte der Maschen bzw. Öffnungen zwischen den Drahtabschnitten merklich verringert werden. Der Drahtkörper hat somit zumindest annähernd dieselbe Oberfläche wie ein herkömmlicher Drahtkörper ohne Lotbeschichtung, so dass das mit der katalytisch wirksamen Schicht fertig beschichtete erfindungsgemäße Katalysatorsubstrat eine zumindest annähernd gleich große Reaktionsoberfläche aufweist, wie herkömmliche Katalysatorsubstrate mit Drahtkörper.

Durch das Lot wird der Drahtkörper insgesamt stabilisiert, so dass Relativbewegungen zwischen unmittelbar zueinander benachbart angeordneten Drahtabschnitten in Folge mechanischer Belastungen, wie Vibrationen, Druckstößen und ähnlichem, nahezu vollständig ausgeschlossen sind. Durch die fehlenden Relativbewegungen zwischen den Drahtabschnitten wird wiederum erreicht, dass die am Lot anhaftende Washcoat-Zwischenschicht, welche die eigentlich katalytisch wirksame Schicht trägt, nicht beschädigt wird, so dass die an der Washcoat-Zwischenschicht gehaltene katalytisch wirksame Schicht weniger schnell abgetragen wird als bei herkömmlichen Katalysatorsubstraten mit Drahtkörpern. Gleichzeitig kann das Lot zum einen an die chemischen Eigenschaften des Drahtmaterials des Drahtkörpers und zum anderen an die chemischen Eigenschaften der Washcoat-Zwischenschicht so angepaßt werden, dass möglichst hohe Bindungskräfte zwischen der Drahtoberfläche des Drahtkörpers und dem Lot einerseits und der Oberfläche des Lots und der Washcoat-Zwischenschicht andererseits erreicht werden. In der Folge zeigt das erfindungsgemäß hergestellte Katalysatorsubstrat einen verglichen mit bekannten Katalysatorsubstraten geringeren Grad an Degradation.

Weitere Vorteile der Erfindung werden aus der nachfolgenden Beschreibung, der Zeichnung sowie den Unteransprüchen ersichtlich.

So wird bei einer besonders bevorzugten Ausführungsform des erfindungsgemäßen Katalysatorsubstrates vorgeschlagen, zum Beschichten des Drahtkörpers ein Lot zu verwenden, dass eine höhere chemische Affinität zur Washcoat-Zwischenschicht aufweist als das Drahtmaterial des Drahtkörpers. Hierdurch wird erreicht, dass sich die Washcoat-Zwischenschicht beim Auftragen auf den Drahtkörper aufgrund der höheren chemischen Affinität des Lotes insbesondere am Lot niederschlägt und an diesem anhaftet. Bei ausreichender Beschichtung mit Lot und damit ausreichender Beschichtung mit der Washcoat-Zwischenschicht ist sichergestellt, dass eine für die katalytische Reaktion ausreichend große katalytisch wirksame Schicht am Katalysatorsubstrat vorhanden ist, ohne dass der Drahtkörper aus einem teuren Werkstoff wie Aluchrom gefertigt sein muß.

Vorzugsweise ist die gesamte Drahtoberfläche des Drahtkörpers mit Lot bedeckt, so dass für den Drahtkörper als Drahtmaterial niedriglegierte Stähle verwendet werden können.

Bei einer besonders bevorzugten Ausführungsform des erfindungsgemäßen Katalysatorsubstrates wird ein Lot auf Aluminium-Chrom-Basis und eine Washcoat-Zwischenschicht auf Aluminiumoxid-Basis verwendet, da diese beiden Materialien eine besonders hohe chemische Affinität zueinander besitzen und folglich gut aneinander haften. Der Aluminiumgehalt des Lotes auf Aluminium-Chrom-Basis liegt bei dieser Ausführungsform vorzugsweise in einem Bereich von 2 bis 6 Gewichtsprozent, besonders bevorzugt in einem Bereich von 3 bis 4 Gewichtsprozent, wodurch eine ausreichend hohe Affinität zur Washcoat-Zwischenschicht gewährleistet ist, während gleichzeitig eine ausreichend hohe Festigkeit der einzelnen Lotverbindungen zwischen den Drahtabschnitten sichergestellt ist.

Als besonders vorteilhaft hat sich die Verwendung eines Lotes herausgestellt, das sich im wesentlichen aus Nickel, Chrom und Aluminium zusammensetzt, wobei insbesondere durch die Nickel- und Chromanteile eine besonders hohe Festigkeit und Hitzebeständigkeit der Lotverbindungen erreicht wird.

Die Washcoat-Zwischenschicht enthält mindestens ein Metalloxid aus Aluminium als Trägeroxid und kann mit weiteren Oxidkomponenten aus der Gruppe der Alkalimetalle, Erdalkalimetalle, wie Barium oder Magnesium, und Selten-Erd-Metalle, wie Lanthan oder Cer, versetzt sein. Die katalytisch wirksamen Bestandteile werden üblicherweise aus der Gruppe der Edelmetalle Platin, Rhodium, Ruthenium, Palladium und Iridium ausgewählt.

Insbesondere durch die Tatsache, dass derartige Katalysatorsubstrate in sehr hohen Stückzahlen gefertigt werden, ist es von besonderem Vorteil, wenn der Drahtkörper aus einem vergleichsweise kostengünstigen niedriglegierten Stahl oder Edelstahl gefertigt ist, wobei die Verwendung niedriglegierten Stahls insbesondere dann bevorzugt ist, wenn die gesamte Drahtoberfläche des Drahtkörpers mit Lot bedeckt ist.

Des weiteren betrifft die Erfindung ein Verfahren zur Herstellung eines derartigen Katalysatorsubstrates für einen Katalysator. Bei dem erfindungsgemäßen Verfahren wird zunächst ein aus Draht gestrickter oder gewickelter Drahtkörper bereitgestellt, welcher anschließend mit einem Lot beschichtet wird. Nach dem Aushärten des Lots wird die Washcoat-Zwischenschicht aufgebracht, auf welche anschließend zumindest abschnittsweise die katalytisch wirksame Schicht aufgetragen wird.

Das Beschichten des Drahtkörpers mit Lot erfolgt vorzugsweise bei einer Temperatur in einem Bereich von 1100°C bis 1250°C. Durch Verwendung dieses Hochtemperaturlotes, das erst ab dieser vergleichsweise hohen Temperatur schmilzt, ist sichergestellt, dass sich das am Katalysatorsubstrat anhaftende Lot trotz der hohen Betriebstemperaturen, mit denen der Katalysator betrieben wird und die kurzzeitig Spitzentemperaturen von bis zu 1100°C aufweisen können, nicht verändert.

Zum Auftragen des Lotes wird bei einer besonders bevorzugten Verfahrensvariante des erfindungsgemäßen Herstellungsverfahrens vorgeschlagen, das Lot in Form einer Lotsuspension oder Lotpaste aus Lotpartikeln und einem Bindemittel sowie gegebenfalls auch einem Flußmittel auf den Drahtkörper aufzubringen und den Drahtkörper nach dem Auftragen der Lotsuspension zum Aufschmelzen des Lotes in einem Wärmeofen, vorzugsweise in einem Vakuumofen, auf die Liquidustemperatur des Lotes zu erwärmen. Durch die Verwendung der Lotsuspension ist ein besonders gleichmäßiger Auftrag des Lotes auf die Oberfläche des Drahtkörpers möglich. Das Auftragen der Lotsuspension kann durch Sprühen, Tränken oder Bepinseln erfolgen.

Alternativ ist es auch möglich, das Lot auf den Drahtkörper aufzutragen, in dem der Drahtkörper in ein Lotbad eingetaucht wird.

Nachfolgend wird die Erfindung anhand eines Ausführungsbeispieles unter Bezugnahme auf die beigefügte Zeichnung näher erläutert. Darin zeigt:
- Fig. 1: in schematischer Darstellung den erfindungsgemäßen Verfahrensablauf zur Herstellung des erfindungsgemäßen Katalysatorsubstrates,
- Fig. 2: eine vergrößerte Seitenansicht der Maschen des im erfindungsgemäßen Katalysatorsubstrat verwendeten gestrickten Drahtkörpers, und
- Fig. 3: einen vergrößerten Schnitt entlang der Schnittlinie A-A in Fig. 2, in dem der Aufbau der verschiedenen auf den Drahtkörper aufgebrachten Schichten dargestellt ist.

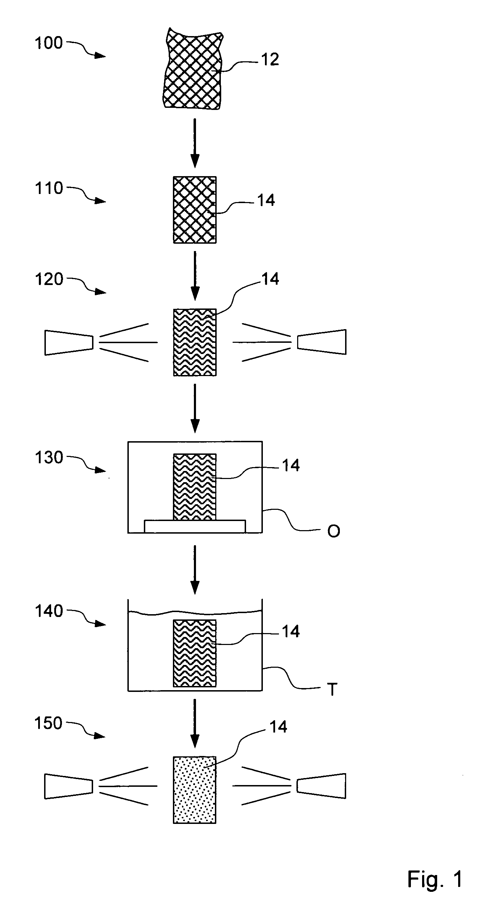

In Fig. 1 ist in schematischer Darstellung der Verfahrensablauf zur Herstellung eines erfindungsgemäßen Katalysatorsubstrates 10 dargestellt.

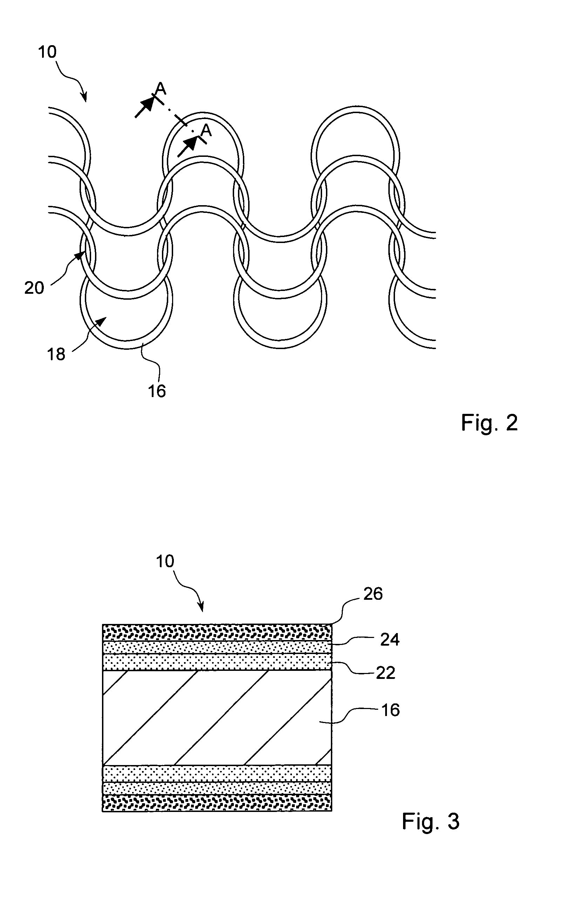

In einem ersten Schritt 100 wird durch Stricken oder Wickeln aus einem Draht aus niedriglegiertem Stahl ein Drahtrohling 12 des Katalysatorsubstrates 10 gefertigt. Anschließend wird in einem Schritt 110 der Drahtrohling 12 durch Umformen in einen Drahtkörper 14 mit vorgegebenen Abmessungen umgeformt. Dieser Umformvorgang ist jedoch nicht zwingend erforderlich, so dass gegebenenfalls auch der gestrickte oder gewickelte Drahtrohling 12 als Drahtkörper 14 der weiteren Verarbeitung zugeführt werden kann. In Fig. 2 ist in vergrößerter Darstellung ein Ausschnitt eines gestrickten Drahtkörpers 14 dargestellt, bei dem die einzelnen Drahtabschnitte 16 unter Bildung von Maschen 18 miteinander verbunden sind.

Wie Fig. 1 weiter zeigt, wird der Drahtkörper 14 nach dem Umformen in einem Schritt 120 mit einer Lotsuspension durch Sprühen, beispielsweise durch Wet-Powder-Spraying, benetzt. Dabei dringt die Lotsuspension insbesondere aufgrund der Kapillarkräfte in die zwischen zueinander benachbarten Drahtabschnitten 16 ausgebildeten Maschen 18 und Spalten 20 ein (vgl. Fig. 2), so dass nicht nur die frei zugänglichen Oberflächenbereiche des Drahtkörpers 14, sondern auch Bereiche zwischen zueinander benachbarten Drahtabschnitten 16 des Drahtkörpers 14 mit der Lotsuspension benetzt sind, wie durch die Wellenschraffur in Schritte 120 angedeutet ist. Die Lotsuspension enthält Lotpartikel aus einer Nickel-Chrom-Aluminium-Legierung mit einem Aluminiumanteil von 3 bis 4 Gewichtsprozent sowie ein Bindemittel.

Der mit Lotsuspension benetzte Drahtkörper 14 wird anschließend in Schritt 130 in einem Vakuumofen O bei einer Temperatur von etwa 1100°C bis 1250°C über einen Zeitraum von etwa anderthalb bis zweieinhalb Stunden wärmebehandelt. Durch die Wärmebehandlung schmelzen die Lotpartikel und verteilen sich gleichmäßig über die gesamte Oberfläche des Drahtkörpers 14, wobei sich das geschmolzene Lot 22 gleichmäßig auf der Oberfläche und in den Spalten 20 des Drahtkörpers 14 verteilt.

Mit zunehmender Temperatur verdampft das Bindemittel, so dass die Drahtoberfläche des Drahtkörpers 14 mit Lot 22 benetzt ist. Anschließend wird der Drahtkörper 14 abgekühlt, damit das Lot 22 aushärtet. Nach dem Aushärten des Lotes 22 ist vorzugsweise die gesamte Oberfläche des Drahtkörpers 14 mit Lot 22 bedeckt, wobei die unmittelbar benachbart zueinander angeordneten Drahtabschnitte 16 durch das Lot 22 zumindest teilweise miteinander verbunden sind.

Im nachfolgenden Schritt 140 wird der mit Lot 22 bedeckte Drahtkörper 14 in ein Tauchbad T getaucht und mit einer Washcoat-Zwischenschicht 24 versehen, die aus Aluminiumoxid gebildet ist. Aufgrund des hohen Aluminiumanteils im Lot 22 hat das Lot 22 eine besonders hohe chemische Affinität zu den Aluminiumoxidpartikeln der Washcoat-Zwischenschicht 24, so dass sich die Aluminiumoxidpartikel, die die Washcoat-Zwischenschicht 24 bilden sollen, gleichmäßig auf dem Lot 22 des Drahtkörpers 14 niederschlagen und an dem Lot 22 anhaften.

Nach dem Auftragen und Aushärten der Washcoat-Zwischenschicht 24 werden in einem Schritt 150 katalytisch wirksame Partikel, beispielsweise aus Platin, Rhodium, Palladium, Ruthenium und/oder Iridium, auf die Washcoat-Zwischenschicht 24 beispielsweise durch Spritzen aufgebracht, wobei sich auf der Washcoat-Zwischenschicht 24 eine katalytisch wirksame Schicht 26 ausbildet. Nach dem Aushärten der katalytisch wirksamen Schicht 26 wird das erfindungsgemäße Katalysatorsubstrat 10 einer Weiterverarbeitung zugeführt.

In Fig. 3 ist in einer Schnittansicht entlang der Schnittlinie A-A in Fig. 2 der Schichtaufbau der verschiedenen Schichten auf einem der Drahtabschnitte 16 des Drahtkörpers 14 dargestellt. Die Oberfläche des Drahtabschnittes 16 ist vollständig mit Lot 22 ummantelt. An dem Lot 22 haftet die Washcoat-Zwischenschicht 24 an, auf der wiederum die katalytisch wirksame Schicht 26 aufgetragen ist.

Durch das Lot 22 werden die einzelnen Drahtabschnitte 16 des Drahtkörpers 14 miteinander verbunden, so dass das erfindungsgemäße Katalysatorsubstrat 10 einerseits eine verglichen mit herkömmlichen Katalysatorsubstraten höhere Steifigkeit und Festigkeit besitzt. Andererseits werden Relativbewegungen zwischen benachbarten Drahtabschnitten 16 im Katalysatorsubstrat 10 verhindert, die durch mechanische Belastungen, wie Schwingungen, Druckstöße und ähnliches verursacht sind. Durch die fehlenden Relativbewegungen zwischen den einzelnen Drahtabschnitten 16 wird beim fertigen Katalysatorsubstrat 10 erreicht, dass der an den Drahtabschnitten 16 anhaftende Schichtaufbau aus Lot 22, Washcoat-Zwischenschicht 24 und katalytisch wirksamer Schicht 26 nicht beschädigt wird, während das Lot 22 aufgrund der hohen chemischen Affinität zur Washcoat-Zwischenschicht 24 gleichzeitig ein gutes Anhaften der Washcoat-Zwischenschicht 24 am Drahtkörper 14 des Katalysatorsubstrates 10 sicherstellt.

Des weiteren kann durch die Verwendung des Lotes 22 für den Drahtkörper 14 ein vergleichsweise kostengünstiger Werkstoff verwendet werden, beispielsweise ein niedriglegierter Edelstahl (beispielsweise 5X CrNi 18 10, Werkstoff-Nr. 1.4301), ein Baustahl oder ein ähnlicher Werkstoff, der lediglich über ausreichende mechanische Eigenschaften sowie eine ausreichende Hitzebeständigkeit verfügen muß. Das Lot 22 kann dagegen zum einen an die chemischen Eigenschaften des Drahtmaterials des Drahtkörpers 14 und zum anderen an die chemischen Eigenschaften der Washcoat-Zwischenschicht 24 so angepaßt werden, dass möglichst hohe Bindungskräfte zwischen der Drahtoberfläche des Drahtkörpers 14 und dem Lot 22 einerseits und der Oberfläche des Lots 22 und der Washcoat-Zwischenschicht 24 andererseits erreicht werden.

Durch das Zusammenwirken dieser Maßnahmen hat das nach dem erfindungsgemäßen Verfahren hergestellte Katalysatorsubstrat 10 verglichen mit den bekannten Katalysatorsubstraten mit Drahtkörpern einen deutlich geringeren Grad an Degradation.

### Bezugszeichenliste

- 10: Katalysatorsubstrat
- 12: Drahtrohling
- 14: Drahtkörper
- 16: Drahtabschnitte
- 18: Maschen
- 20: Spalte
- 22: Lot
- 24: Washcoat-Zwischenschicht
- 26: katalytisch wirksame Schicht
- O: Vakuumofen
- T: Tauchbad

- 100: erster Schritt (Stricken oder Wickeln)
- 110: zweiter Schritt (Umformen)
- 120: dritter Schritt (Auftragen der Lotsuspension)
- 130: vierter Schritt (Wärmebehandlung)
- 140: fünfter Schritt (Auftragen der Washcoat-Zwischenschicht)
- 150: sechster Schritt (Auftragen der katalytisch wirksamen Schicht)

## Patentansprüche

1. Katalysatorsubstrat für einen Katalysator, insbesondere für einen Katalysator zur Behandlung von Abgasen einer Verbrennungskraftmaschine, mit einem Drahtkörper (14) aus gestricktem oder gewickeltem Draht, wobei der Drahtkörper (14) zumindest teilweise mit einer Washcoat-Zwischenschicht (24) versehen ist, welche zumindest abschnittsweise eine katalytisch wirksame Schicht (26) trägt,
**dadurch gekennzeichnet,**
**dass** die Drahtoberfläche des Drahtkörpers (14) mit Lot (22) beschichtet ist, und dass die Washcoat-Zwischenschicht (24) am Lot (22) anhaftet.

2. Katalysatorsubstrat nach Anspruch 1, **dadurch gekennzeichnet, dass** das Lot (22) eine höhere chemische Affinität zur Washcoat-Zwischenschicht (24) aufweist als das Drahtmaterial des Drahtkörpers (14).

3. Katalysatorsubstrat nach Anspruch 1 oder 2, **dadurch gekennzeichnet, dass** zumindest annähernd die gesamte Drahtoberfläche des Drahtkörpers (14) mit dem Lot (22) bedeckt ist.

4. Katalysatorsubstrat nach Anspruch 1, 2 oder 3, **dadurch gekennzeichnet, dass** das Lot (22) ein Lot auf Aluminium-Chrom-Basis und die Washcoat-Zwischenschicht (24) eine Washcoat-Zwischenschicht auf Aluminiumoxid-Basis ist.

5. Katalysatorsubstrat nach Anspruch 4, **dadurch gekennzeichnet, dass** das Lot (22) einen Aluminiumgehalt in einem Bereich von 2 bis 6 Gewichtsprozent, vorzugsweise in einem Bereich von 3 bis 4 Gewichtsprozent hat.

6. Katalysatorsubstrat nach Anspruch 4 oder 5, **dadurch gekennzeichnet, dass** sich das Lot (22) im wesentlichen aus Nickel, Chrom und Aluminium zusammensetzt.

7. Katalysatorsubstrat nach einem der Ansprüche 1 bis 6, **dadurch gekennzeichnet, dass** die Washcoat-Zwischenschicht (24) mindestens ein Metalloxid aus Aluminium enthält.

8. Katalysatorsubstrat nach einem der Ansprüche 1 bis 7, **dadurch gekennzeichnet, dass** der Drahtkörper (14) aus einem niedriglegierten Edelstahl oder Baustahl gefertigt ist.

9. Verfahren zur Herstellung eines Katalysatorsubstrates für einen Katalysator, insbesondere für einen Katalysator zur Behandlung von Abgasen einer Verbrennungskraftmaschine, bei dem ein aus Draht gestrickter oder gewickelter Drahtkörper (14) bereitgestellt wird, auf den zumindest teilweise eine Washcoat-Zwischenschicht (24) aufgebracht wird, welche zumindest abschnittsweise mit einer katalytisch wirksamen Schicht (26) versehen wird,
**dadurch gekennzeichnet,**
**dass** der Drahtkörper (14) vor dem Aufbringen der Washcoat-Zwischenschicht (24) mit einem Lot (22) beschichtet wird, und
**dass** die Washcoat-Zwischenschicht (24) nach dem Aushärten des Lots (22) auf das Lot (22) aufgebracht wird.

10. Verfahren nach Anspruch 9, **dadurch gekennzeichnet, dass** der Drahtkörper (14) bei einer Temperatur oberhalb von 900°C, vorzugsweise in einem Bereich von 1100°C bis 1250°C, mit Lot beschichtet wird.

11. Verfahren nach Anspruch 9 oder 10, **dadurch gekennzeichnet, dass** das Lot (22) in Form einer Lotsuspension oder Lotpaste aus Lotpartikeln und einem Bindemittel sowie gegebenenfalls einem Flußmittel auf den Drahtkörper (14) aufgetragen wird, und dass der Drahtkörper (14) nach dem Auftragen der Lotsuspension zum Aufschmelzen des Lotes (22) in einem Wärmeofen, vorzugsweise in einem Vakuumofen (O), auf die Schmelztemperatur des Lotes (22) erwärmt wird.

12. Verfahren nach Anspruch 11, **dadurch gekennzeichnet, dass** das Auftragen der Lotsuspension durch Sprühen, Tränken oder Bepinseln erfolgt.

13. Verfahren nach Anspruch 9 oder 10, **dadurch gekennzeichnet, dass** der Drahtkörper (14) zum Auftragen des Lotes (22) in ein Lotbad getaucht wird.
